# EUROPEAN PATENT APPLICATION

(11) **EP 1 884 693 A1**
(43) Date of publication of application: **06.02.2008**
(21) Application number: 06016224.5
(22) Date of filing: 03.08.2006
(51) Int. Cl.: F16K 11/074, E03C 1/04, B05B 1/16, B05B 7/04

(54) **Improved showerhead**

(71) Applicant: Nobili, Fabrizio, 6534 San Vittore (CH)
(72) Inventor: Nobili, Fabrizio, 6534 San Vittore (CH)
(74) Representative: Zardi, Marco

(57) **Abstract**

The present invention relates to a showerhead (1) of a type which is connected by a flexible conduit (27,28) to a tap assembly communicated to a water supply system and has at least one fluid discharge/shut-off control (25) mounted on the showerhead (1).
Advantageously, said control (25) is a control lever (13) adapted to be moved angularly about the body (20) of the showerhead, and at least a second control (35) is provided for accurate adjustment of the fluid delivery rate.

## Description

### Field of Application

The present invention relates to a showerhead of improved design.

More particularly, the invention relates to a showerhead of a type which is coupled with a flexible conduit to at least a pair of piping outlets provided to deliver warm and cold fluids from a water supply system. The invention relates in particular, though not exclusively, to a showerhead for use as a dispenser and supplier of fluid placed at the free end of a flexible conduit on a kitchen sink, and the following description is made with specific reference to this specific field of application for convenience of illustration only.

### Prior Art

As the skilled persons in the art are well aware, there are currently available on the market a number of showerheads for sink installation, which differ from one another by their design, size, and mode of operation.

Such showerheads are hydraulically piped, as by means of a flexible conduit, to a mixer assembly controlling the fluid outflow, i.e. for out-flowing and regulating the water supply stream of cold, warm, or mixed water. The mixer assembly is usually wall-mounted beneath the sink, although it may be found to jut out from the wall above the sink in some instances.

A user can grasp the showerhead with a hand and pull it out from a holding fixture, to which the showerhead and the flexible conduit connecting the showerhead to the mixer assembly can be slid back into an out-of-sight storage position. These showerheads are also called pull-out spouts in the art.

The showerhead holding fixture is provided at a tap end that overhangs the sink and has the showerhead for its dispensing end.

It should be noted that the tap may be a single-control mixer tap having a manually operated control handle, mounted atop or to one side, for discharging and shutting off a water outflow as well as adjusting the proportion of admixed cold/warm water.

However, the showerhead is more frequently provided with a manual control in the form of a mechanical pushbutton, whereby the water outflow can be changed over between an undivided stream water supply from a central orifice and a spread shower pattern from a plurality of tiny peripheral orifices laid all around the central one.

There are different ways of so changing over the outflow from the showerhead itself, one of which is disclosed in European Patent Application No. 1 577 016 by this Applicant, for instance.

While being advantageous on several counts and substantially achieving their objectives, the above-mentioned prior designs have a limitation in that a user is first to actuate the handle control of the tap mounted fixedly at the sink in order to have water flowed through the showerhead, and then manipulate the showerhead own control in order to select a particular dispensing mode.

The above arrangement makes the operation for discharging, shutting off and mixing the water flows an inconvenient one, inasmuch as a user who is already holding the showerhead in one hand has to revert to manipulating the control handle on the tap assembly to go through the above adjustment procedure.

A prior approach described in US Patent No. 5,735,467 is aimed at overcoming all such drawbacks by the provision of a showerhead which is connected to respective warm and cold water outlets by a pair of flexible conduits and includes a manual actuation valve for discharging and shutting off the fluid outflow.

While being advantageous on several counts and substantially achieving its objective, this prior approach is subject to major limitations from a complicated and expensive construction, and above all, is unsuitable to a widespread application in domestic systems due to an unacceptable amount of leakage brought about by an inadequate flow shut-off effect.

The underlying technical problem of this invention is to provide a showerhead with constructional and functional features that enable the water discharging and shutting off operations, as well as a mixage of warm/cold flows, to be controlled directly at the showerhead, thereby disposing of the control handle of the showerhead connection tap and overcoming the limitations on prior art designs.

Another object of this invention is to provide such a showerhead, which incorporates all the control elements that are required for both actuating it and adjusting the outflow rate, is simple to manufacture and assemble, effectual to keep the outflow tightly shut off when not in use, and cost-efficient.

### Summary of the Invention

The solving idea on which the present invention stands is one of having at least one manual control installed at the showerhead for discharging and shutting off the fluid outflow, which control can be actuated by a user through a continuous angular or sliding movement, such that the mixage of warm/cold flows can be adjusted in a most accurate manner using but one finger.

Further, in a preferred embodiment, the showerhead can be provided with at least a pair of mechanical controls: one for discharging/shutting off the fluid outflow and adjusting the delivery rate, and the other for finely mixing the flows together by adjusting the ratio of cold to warm water as desired.

Based upon the above idea, the technical problem is solved by a showerhead as outlined above and defined in the characterizing portions of Claim 1 and the followings.

The features and advantages of the showerhead and the mixer assembly according to the invention can be more clearly understood by having reference to the following description of an embodiment thereof, given herein by way of example and not of limitation, and to the accompanying drawings.

### Brief Description of the Drawings

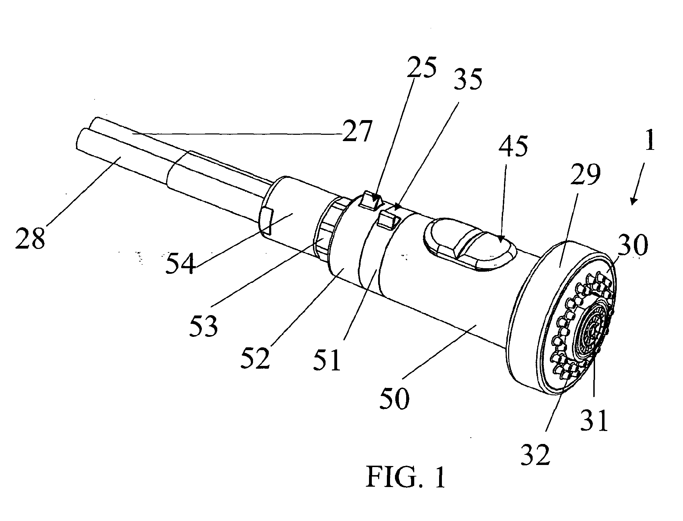

Figure 1 is a perspective view showing schematically an improved showerhead embodying this invention.

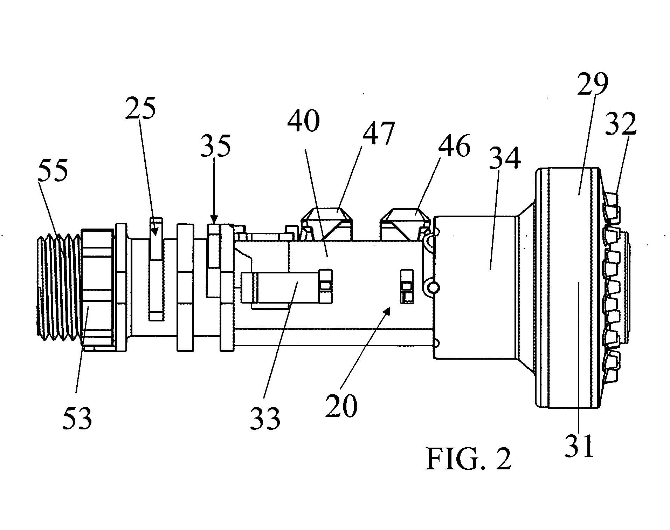

Figure 2 is a side view showing schematically a detail of the showerhead of Figure 1.
Figure 3 is a schematic top plan view of the detail shown in Figure 2.
Figure 4 is a longitudinal section view showing schematically the showerhead of Figure 1.

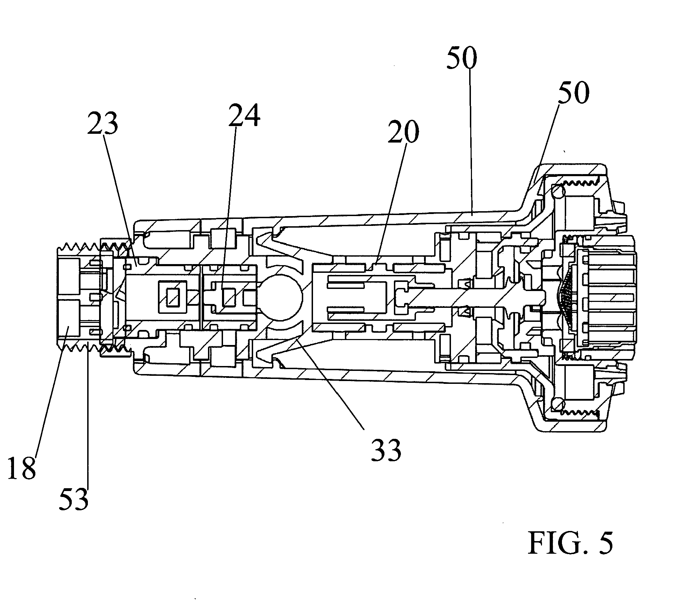

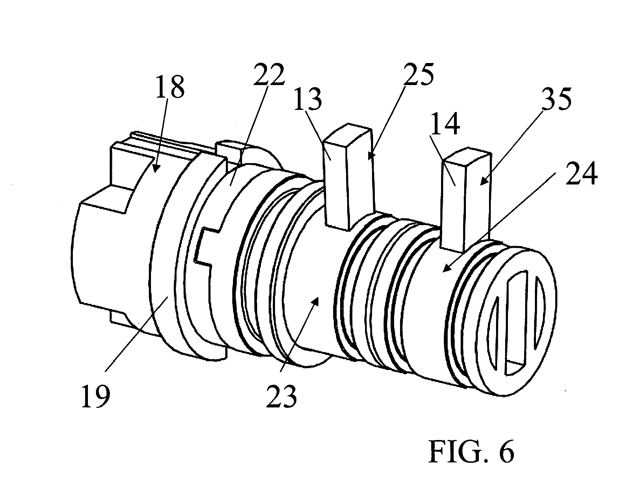

Figure 5 is a longitudinal section view from above, showing schematically the showerhead of Figure 1.
Figure 6 is a perspective view showing schematically a detail of a connection fitting to a flexible conduit of the showerhead of Figure 1.
Figure 6A is a perspective view of the fitting shown in Figure 6.
Figure 6B is a front view of the fitting of Figure 6 as seen from the showerhead interior.
Figure 6C is a front view of the fitting of Figure 6 as seen from the flexible conduit end for connection to the water supply system.
Figure 6D is another perspective view of the fitting of Figure 6 as associated with a disk shutter.
Figure 7 is a perspective view of a set of internal elements of the showerhead according to the invention.
Figure 8 is another perspective view of the set of internal elements shown in Figure 7, with one such element removed.
Figure 9 is another perspective view of the set of internal elements shown in Figure 7, with another such element removed.
Figure 9A is a front view showing schematically an element in the set of Figure 9.
Figure 10 is a longitudinal section view showing in perspective the set of elements of Figure 7.
Figure 11 is a perspective view showing schematically the set of elements of Figure 7 as viewed from a different angle.
Figure 12 is a perspective view showing schematically the set of elements of Figure 11 in a different operational state.
Figures 13 to 16 are front views showing schematically a pair of shutter members provided inside the showerhead according to the invention, in different operational states thereof.

### Detailed Description

With reference to the drawing figures, generally and schematically shown at 1 is an improved showerhead which is, in accordance with this invention, connected to a fluid tap assembly, not shown because conventional, to funtion as the dispensing end of the tap assembly.

The tap assembly comprises a one-piece or unitary body for connection to the water supply system, which may be wall-mounted close to a delivery outlet of cold and warm water. Alternatively, the unitary body may be mounted beneath a sink, not shown because conventional, which would usually be installed level with and above said water delivery outlet.

It should be understood that the unitary body 3 could be located elsewhere, for instance above the sink, or recessed in a wall, optionally behind a door.

Likewise, the tap assembly could be installed in a bathroom, beneath a washbasin or by a bathtub.

The unitary body has fluid inlets respectively connected to the outlet end of the cold/warm water supply system by flexible conduits.

The inlets are in fluid communication with a pair of delivery outlets provided in the unitary body at an intermediate, substantially central location, not shown because conventional.

Respective valves are provided in the fluid path from each fluid inlet to the delivery outlets for the purpose of shutting off the cold and/or warm fluid flowpaths to the showerhead 1 whenever desired.

It will be appreciated by the skilled persons in the art that simple wall-mounted connections with warm/cold water valves placed upstream could be used instead of the unitary body. Such components may be preinstalled as parts of the masonry and plumbing works, a pre-requisite being that at least two water outlets be provided for connection of the showerhead of this invention by means of respective flexible conduits. Advantageously according to the present invention, the showerhead 1 is connected either to both water supply outlets or both outlets in the unitary body by means of a pair of flexible conduits 27 and 28 respectively led to either outlets.

The showerhead 1 includes a dispensing end 30 which is conventionally provided with a central orifice 31 delivering a solid stream of fluid, and with a plurality of tiny peripheral orifices 32 delivering a fractioned stream of fluid.

The dispensing end 30 is actually a termination of a diffuser 29 having an oblate cylinder shape and being thread connected to a diffuser body 34 of reduced diameter arranged to enclose the changeover mechanism and cinematic motions.

The internal structure of the diffuser 29, and the changeover mode of the fluid outflow either through the central orifice 31 to the peripheral orifices 32 or, viceversa, is controlled conventionally by a bistable control 45, e.g. as described in European Patent Application No. 1 577 016 by this Applicant.

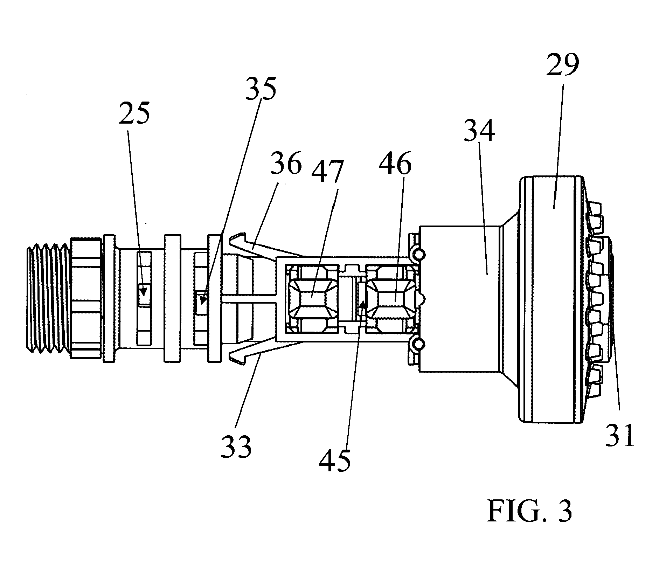

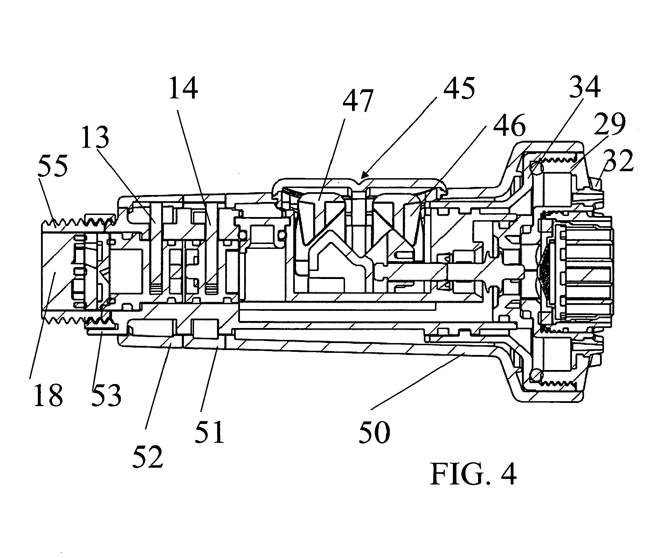

The bistable control 45 acts on respective mechanical control pushbuttons 46 and 47, shown in Figures 3 and 4, whereby the fluid is directed respectively to the central orifice 31 or the peripheral orifices 32 of the dispensing end 30.

The diffuser body 34 has a reduced-diameter portion which is received inside a handgrip housing 50 of the showerhead 1 having an essentially tube-like configuration.

The housing 50 is essentially frusto-conical in shape with a narrow end next to the fluid delivery fitting and a wide end next to the diffuser 29 that expands into a cylindrical portion of increased diameter radiused to the frusto-conical portion.

The control pushbuttons 46 and 47 rise flush from a lateral opening of the frusto-conical portion of the housing 50 and are covered under the bistable control 45.

Advantageously in this invention, the showerhead 1 is provided with at least one fluid shut-off/discharge control 25 constructed for angular or sliding movement in a continuous fashion to perform an accurate combined action of shutting off and/or mixing the cold/warm flows.

More particularly, this control 25 is a radially extending lever which can be moved through an angle peripherally respect to the body of the showerhead 1.

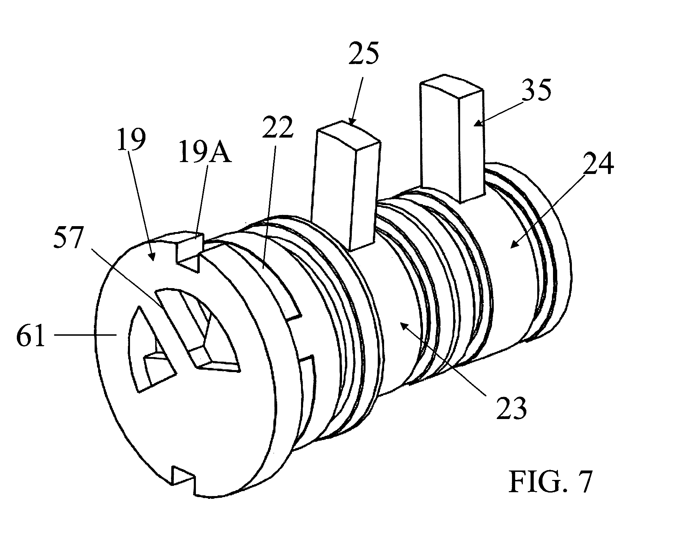

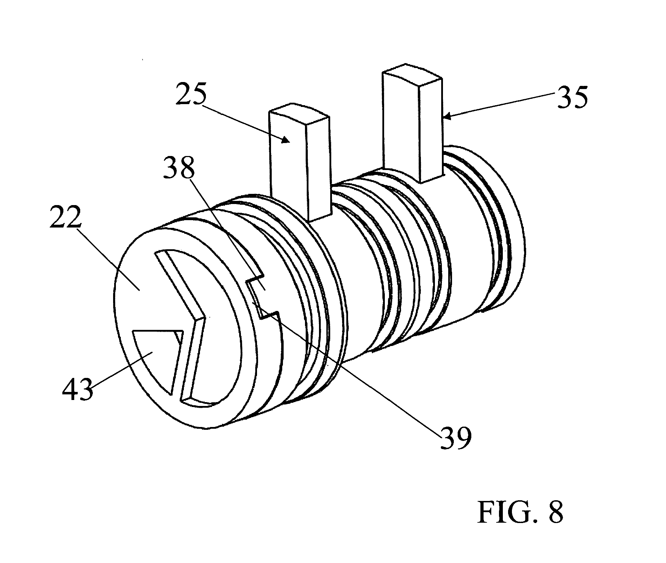

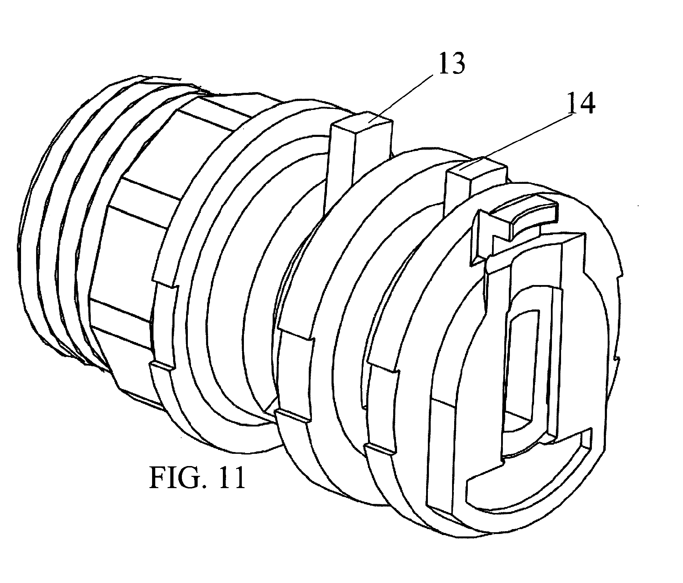

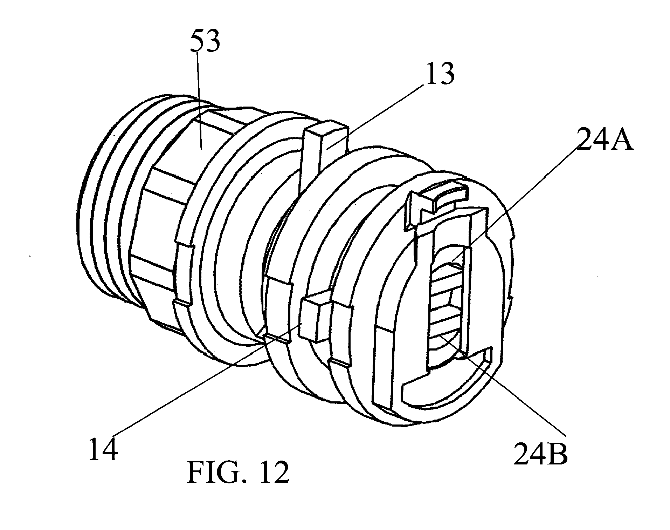

More particularly, as shown in Figures 7 to 12, the control 25 comprises a lever 13 passed through a radial opening of a bush 23 to jut a short distance radially out of the body of the showerhead 1, such that it can be operated with just one finger by a user of the showerhead. The bush 23 is mounted rotatably within a ring cap 52, as explained below, and the lever portion that juts out from the showerhead body through the cap 52 is provided with a dual-flap covering for more convenient handling by the user in either directions of rotation.

The bush 23 is preferably made of a synthetic plastics material and is formed internally with a cylindrical conduit section 37 which is partly blocked off by the lever 13 to leave two oppositely located and essentially crescent-shaped slits 23A and 23B uncovered for allowing the warm and cold fluids therethrough from a fitting 18.

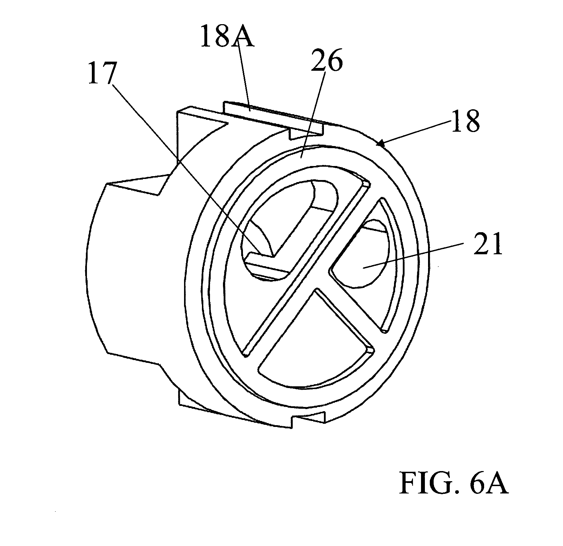

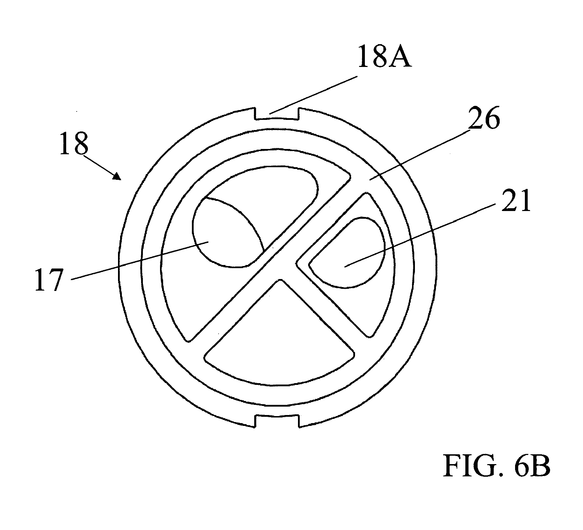

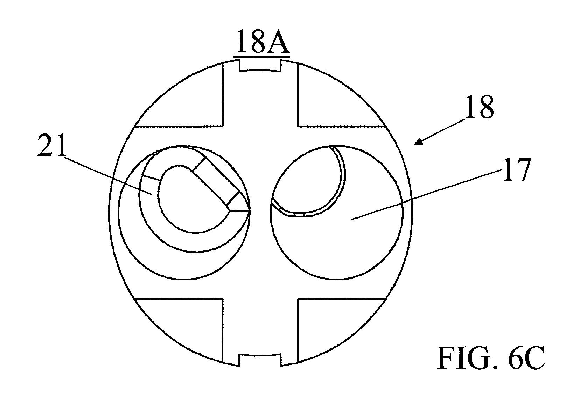

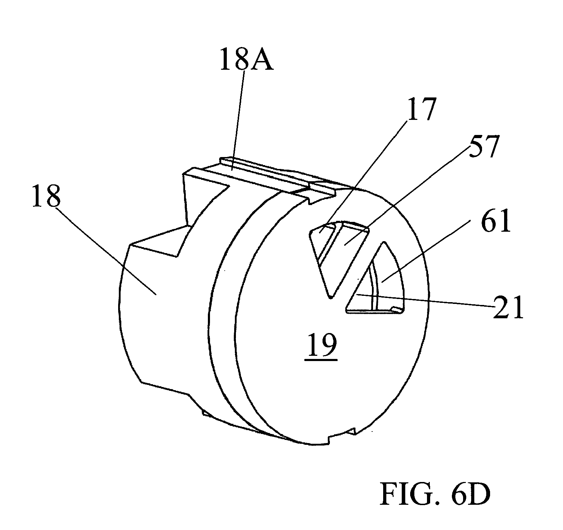

This fitting 18 will be described in detail below with reference to Figures 6A, 6B, 6C and 6D. For the time being, it will suffice to say that the fitting 18 is to connect the free ends of the flexible conduits 27 and 28 to the body 20 of the showerhead 1.

The bush 23 is formed with several integral teeth 38 which project peripherally in a longitudinal direction substantially parallel to the axis of the body 20 of the showerhead 1. In the embodiment being described here by way of example and not of limitation, there are provided three such teeth 38 spaced approximately 120° apart.

The teeth 38 engage in mating sockets 39 in a shutter disk 22 having a through opening 43 and being made of a durable material harder than the material of the bush 23. The shutter disk 22 may be made of a ceramic material, for example, the mutual engagement of the teeth 38 on the bush 23 with the sockets 39 in the disk 22 enabling the disk 22 to be part-rotated or moved angularly jointly with the angular movement of the bush 23 by acting on the lever 13.

Advantageously, a second shutter disk 19 is mounted fixedly to the fitting 18 via a sealing gasket 26. The second disk 19 provides a pair of through openings 57 and 61 and is held fast with the fitting 18 by the outer structure of the housing of the showerhead 1.

For this purpose, the fitting 18 and second shutter disk 19 provides guiding slots 18A and 19A, respectively, to be aligned together upon assembling the showerhead 1.

The second shutter disk 19 is formed from a durable material, e.g. the same material as the first shutter disk 22, e.g. a ceramic material. The second shutter disk 19 provides for a specially smooth angular sliding movement of the first shutter disk 22. Basically, the first shutter disk 22 is held close against, and is angularly and coaxially movable with respect to the second disk such that, depending on the relative positions of the two disks 22 and 19, their openings may be overlapped, partly overlap, or be blocked off, thereby discharging or shutting off the fluid outflow in an effectively leakproof way. By arranging the openings in the respective shutter disks 19 and 22 to overlap in full or in part, the flow dispensing rate can be controlled in a continuous fashion such that, by manually actuating the control 25, a user can also adjust the mixage of cold and warm fluids most accurately but very easily.

The fitting 18 has a pair of through openings 17 and 21, each adapted to receive the free ends of either flexible conduits 27 and 28 for dispensing warm and cold fluids, respectively. The openings 17 and 21 taper toward the showerhead 1, in other words toward the portion of the fitting 18 next to the second shutter disk 19 fastened to the fitting 18.

The taper in the openings 17 and 21 is achieved by the interposition of material in the solid structure comprising the fitting 18, and is advantageous in that it allows the cold and warm fluid flows to be distinctly through the openings 57 and 61 of the stationary second shutter disk 19 brought into alignment to the opening 43 in the shutter disk 22 angularly movable to partly or fully block either of said openings 57 and 61.

Figure 6C is a front view showing a side of the fitting 18 for connection to the flexible conduits 27 and 28, and Figure 6B is a front view of the other side of the fitting 18 where the sealing gasket 26 is to receive the second shutter disk 19.

Shown in Figure 7 are the circular sector outlines of the openings 57 and 61 in the second shutter disk 19, as substantially matching the openings 17 and 21 of the fitting 18, viewed from the side where the fitting is made fast with the stationary disk 19.

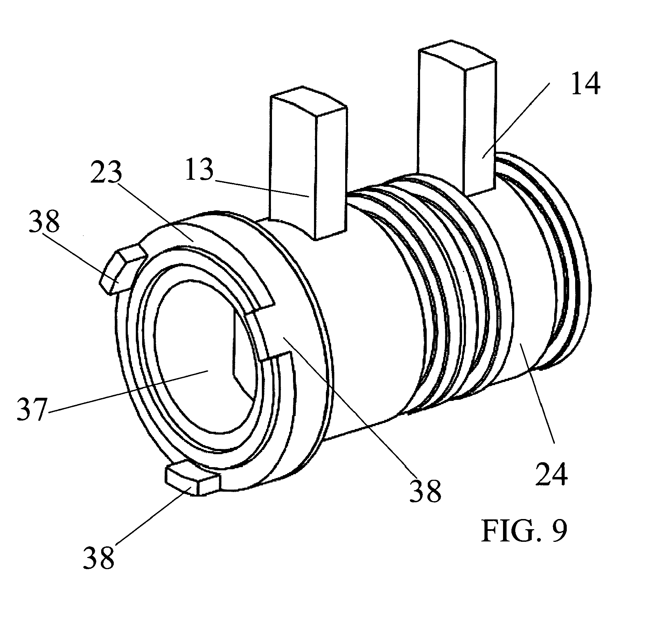

Figure 8 shows the outline of a single opening 43 formed in the shutter disk 22. This opening also has a circular sector outline for reasons that will be clear in the following description.

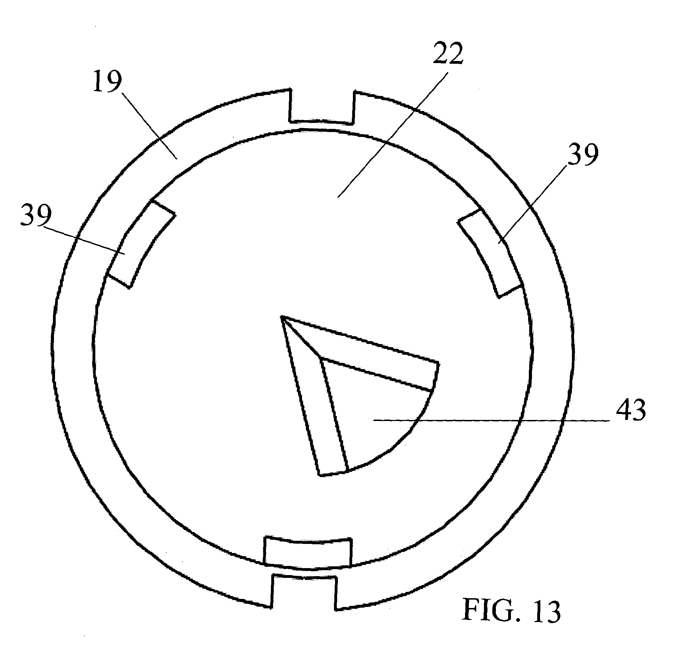

Figure 13 shows schematically the shutter disk 22 overlapping the second shutter disk 19 with the opening 43 aligned to a solid portion of the stationary second shutter disk 19 beneath. In this state no fluid will be dispensed from the showerhead 1.

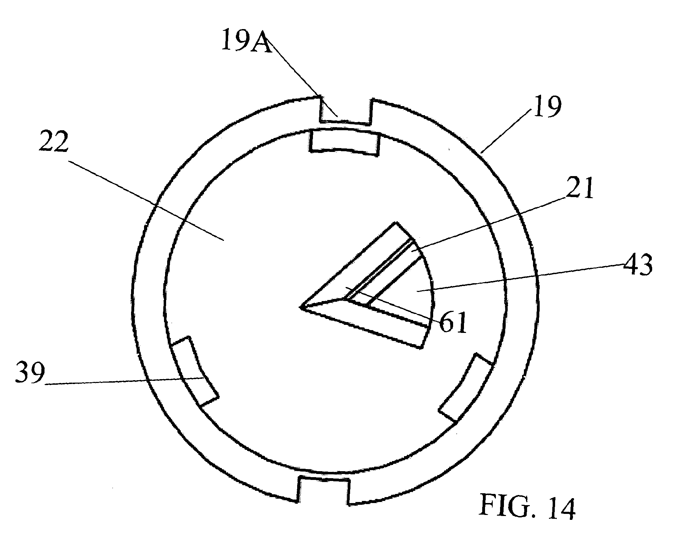

Figure 14 shows the same structure as Figure 13, but in an operational state whereby the opening 43 of the shutter disk 22 is substantially aligned to the opening 61 in the second shutter disk 19, and accordingly, to the opening 21 in the fitting 18, such that all the fluid, e.g. all the cold fluid, available for delivery will be directed through the flexible conduit 27.

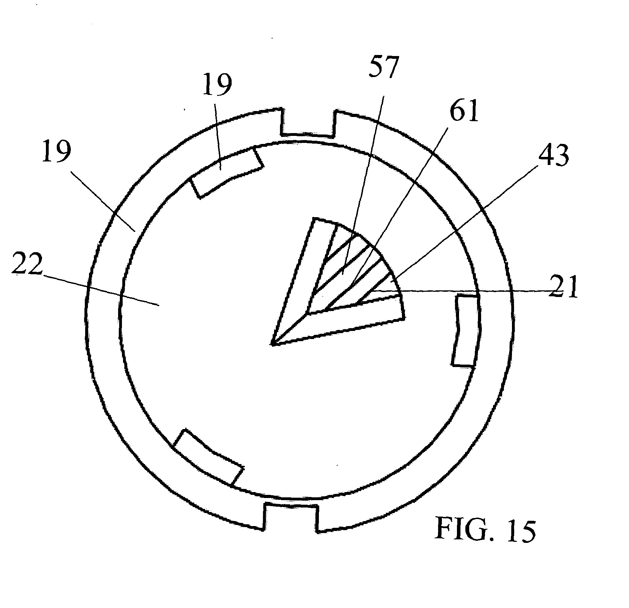

Figure 15 illustrates in schematic form a further step in the angular movement of the shutter disk 22 relative to the second shutter disk 19; it can be seen from this figure that the opening 43 is now partly blocked off by underlying edge portions of the openings 21 and 61. In this state, the cold fluid outflow is throttled down and the warm fluid begins to be admitted through the openings 17 and 57.

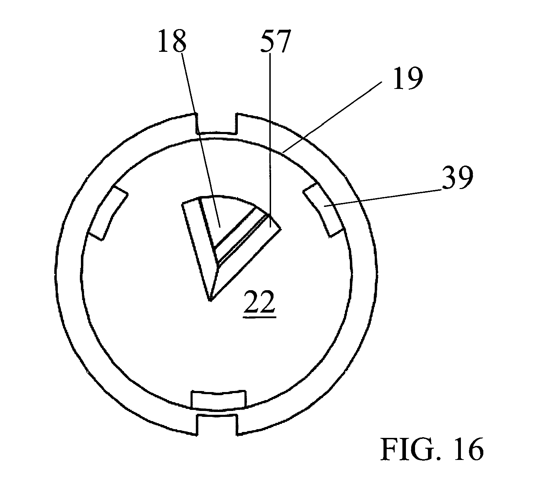

Figure 16 schematically shows a later step in the angular movement of the shutter disk 22 relatively to the second shutter disk 19; it can be seen from this figure that the angular travel of the shutter disk 22 has reached a position where the opening 43 is substantially aligned to the opening 57 in the second shutter disk 19, and therefore, to the opening 17 in the fitting 18, thereby all the fluid, i.e. the warm fluid, available for delivery will be directed through the flexible conduit 28.

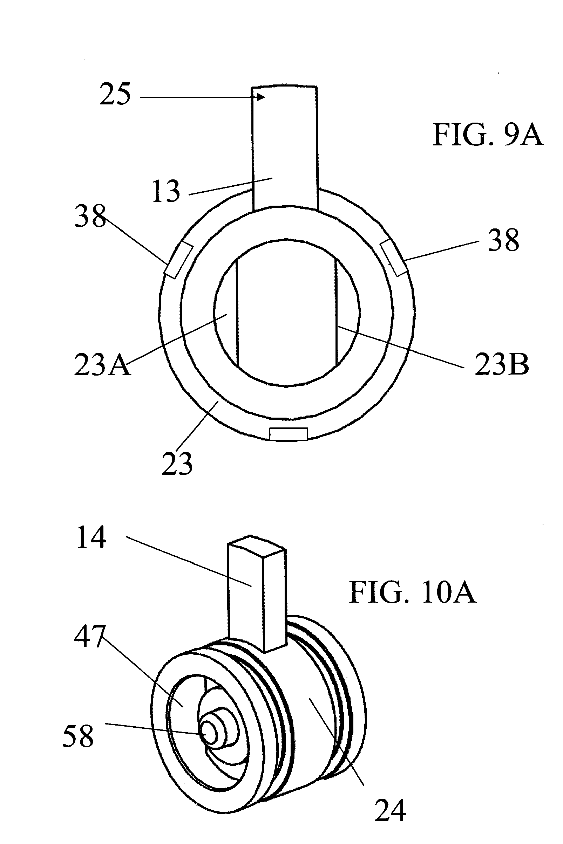

Another constructional aspect of the showerhead 1 according to the invention will now be described with reference to Figures 9 and 9A.

The showerhead 1 is provided with at least a second control 35 for fine adjustment of the fluid outflow rate.

The second control 35 is also constructed to perform an angular or sliding movement into positions that can be selected in a continuous fashion. Preferably, the control 35 is a separate control lever 14 placed a predetermined distance apart from the first control lever 13, and extends radially out such that an end portion or section of same will project from the body of the showerhead 1.

More particularly, the control lever 14 is mounted to a corresponding bush 24 which is carried rotatably within a ring cap 51, the latter forming, in combination with the ring 52 of control lever 13, a coaxial extension with respect the handgrip housing 50 of the showerhead 1.

The rings 51 and 52 are mounted to abut axially against the body 20 before the diffuser body 34 and the housing 50 are assembled. A nipple 53 covering the fitting 18 is provided, moreover, with a threaded portion 55 for thread engagement with the end 54 of a ferrule terminating both flexible conduits 27 and 28. Thus, the nipple 53 will function as a locknut to prevent the end 54 from coming unexpectedly loose.

The bush 24 is preferably made of a synthetic plastics material and is formed internally with a cylindrical duct section 47 which is throttled down by the lever 14 leaving two opposite slits 24A and 24B uncovered for the warm/cold fluid to flow through from the slits of the bush 23 ahead, so that the latter bush locates upstream in the flowpath from the supply system to the showerhead 1.

The internal construction of the bush 24 is identical with that of bush 23, and has an inside portion arranged to carry a central post 58 for an elastic member 59, e.g. a prestressed spring.

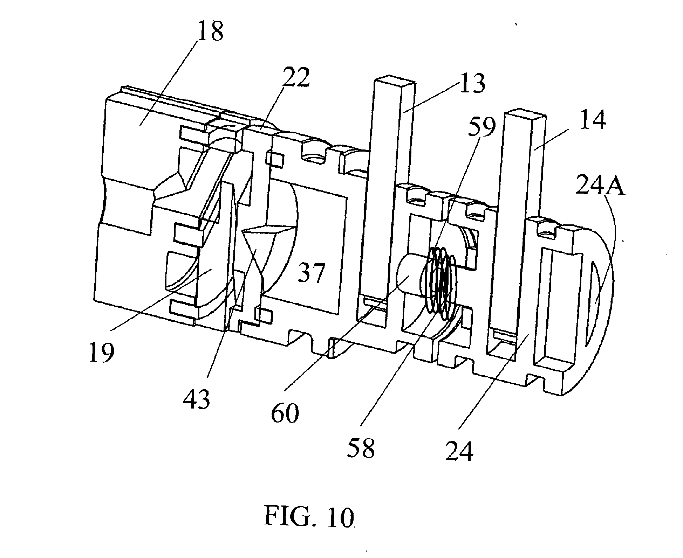

The spring 59 is shown in the cross-sectional view of Figure 10 and is wound around two oppositely located posts 58 and 60 of the respective bushes 24, 23 facing but not interfering with each other, supporting the spring 59 riding over the posts and allowing the spring 59 to carry out an elastic solicitation action to bias the bushes 23 and 24 away from each other.

This feature is effective to avoid stiffing and smooth the relative movements of the control levers 14 and 13 controlling the angular movements of the respective bushes 24 and 23 mounted for free rotation.

The bias force of the spring 59 ensures a specially smooth angular movement despite the synthetic plastics material of the bushes 23, 24 being inherently less slippery than the ceramic material of the shutter disks 22 and 19.

The handgrip housing 50 encloses and guards the changeover mechanism and cinematic motions inside the diffuser body 34 as well as the bushes 23 and 24 housing the controls 24 and 35.

It can be appreciated from the foregoing that the showerhead according to the invention is simple to operate, since a user can grasp and use it the same way as an ordinary pull-out showerhead incorporated in a basin unit, but with the possibility here of controlling the fluid to flow out by direct actuation of the manual control 25 at the showerhead, perhaps using but one finger, i.e. the thumb. With this manual adjustment, the mixage of warm and cold fluids can also be controlled to set a desired temperature for the water being dispensed.

In addition, a similar manual action on the second control 35 will adjust the delivery rate, the changeover between the central orifice 31 and the peripheral orifices 32 being achieved through the bistable control 45.

In other words, all the operations for discharging and shutting off the fluid outflow, as well as any adjustment of temperature and delivery rate, are performed by manual actuation of the controls 25 and/or 35 at the showerhead 1.

This feature of the invention makes any showerhead attaching faucet unnecessary.

It can be appreciate from the foregoing description that the showerhead according to the invention does solve the technical problem, and affords a number of advantages, foremost among which is the fact that the fluid outflow can be discharged and shut off, and its temperature and rate adjusted, by just manipulating the control levers 25 and 35.

The showerhead response to such a user's action is immediate, since the showerhead would be grasped in the user's hand anyhow, whenever water is to be dispensed through it.

The invention eliminates the need of a mechanical control handle on an attachment faucet for the pull-out showerhead.

Also, controlling and adjusting the water outflow is a simple and effective operation, to the point that to have the fluid dispensed, grasping the showerhead with one hand is just about the only manual action involved.

## Claims

1. A showerhead (1) of a type which is connected by a flexible conduit to at least a pair of water outlets for delivering warm/cold fluid from a water supply system through a pair of flexible conduits (27,28) connected to a respective one of said water outlets, **characterized in that** it includes, mounted on the showerhead (1), at least one control (25) for discharging, shutting off, and mixing the fluid outflow, said control being adapted to be moved angularly or slid for continuous position adjustment such that accurate combined shut-off and/or mixage of the warm and cold outflows are achieved.

2. A showerhead according to Claim 1, wherein said control (25) is a control lever (13) jutting radially out of the body (20) of the showerhead (1) and being movable angularly about the periphery of said body (20) of the showerhead (1).

3. A showerhead according to Claim 2, **characterized in that** it includes at least a second control (35) for accurate adjustment of the fluid outflow rate.

4. A showerhead according to Claim 3, wherein said second control (35) is a separate second lever (14) also jutting radially out of the body (20) of the showerhead (1) and being located a predetermined distance apart from said first lever (13), said second lever (14) being movable angularly about the periphery of the body (20) of the showerhead (1).

5. A showerhead according to Claim 1, **characterized in that** it is connected to a pair of cold/warm fluid outlets of a fitting connected to said water supply outlets by a pair of flexible conduits (27,28) and provided with respective shut-off valves.

6. A showerhead according to Claim 1, **characterized in that** it includes a pair of shutter disks (19,22) of which one (19) is stationary and the other movable, the stationary disk having a pair of openings (57,61) and the movable disk having a single opening (43) for the cold/warm fluid to flow through, the movable disk being adapted to be moved angularly relative to the stationary disk (19) by means of said control (25) in order to discharge and shut off the fluid.

7. A showerhead according to Claim 6, **characterized in that** the single opening (43) in the movable disk (22) is arranged to interfere fully or in part with either of said openings (57,61) in the stationary disk (19) during the angular rotation of the movable disk (22).

8. A showerhead according to Claim 6, **characterized in that** said disks are made of a ceramic material.

9. A showerhead according to Claim 6, **characterized in that** it includes a fitting (18) comprising openings (17,21) whereto the free ends of said flexible conduits (27,28) are connected, said fitting being made fast with said stationary disk (19) via a sealing gasket (26).

10. A showerhead according to Claim 6, **characterized in that** said control (25) is a control lever (13) jutting radially out of a bush (23) carried rotatably within a portion (52) of a housing (50) of said showerhead (1), and that said bush (23) is made fast with the shutter disk (22) continuously angularly movable from a first rest position where it is fully blocking said cold/warm fluid delivery openings (57,61) to an operational position where it is partly blocking either or both said openings (57,61).

11. A showerhead according to Claim 1, **characterized in that** it includes a bistable control (45) for diverting the fluid outflow from a central orifice (31) over to a plurality of tiny peripheral orifices (32) of the showerhead (1).

12. A showerhead according to Claim 4, **characterized in that** said control (25) is a control lever (13) jutting radially out of a bush (23) carried rotatably within a portion (52) of a housing (50) of said showerhead (1), and that said second control (35) is a control lever (14) jutting radially out of a bush (24) carried rotatably within a portion (51) of the housing (50) of the showerhead (1), said first and second bushes (23,24) being supported rotatably against the force of an elastic means (5) biasing said bushes away from each other.

13. A showerhead according to Claim 6, **characterized in that** said openings (57,61) have circular sector outlines.

14. A showerhead according to Claim 6, **characterized in that** said single opening has a circular sector outline.

15. A showerhead according to Claim 9, **characterized in that** the openings (17,21) in said fitting (18) are tapered and receive the free ends of the flexible conduits (27,28) on the one side and are aligned to the openings (57,61) in said stationary shutter disk on the other.
